# EUROPÄISCHE PATENTSCHRIFT

(11) **EP 1 464 436 B1**
(45) Veröffentlichungstag und Bekanntmachung des Hinweises auf die Patenterteilung: **03.01.2007**
(21) Anmeldenummer: 03007502.2
(22) Anmeldetag: 01.04.2003
(51) Int. Cl.: B23K 26/06, B23K 26/28, B23K 26/10, B23K 26/14

(54) **Werkzeug zur Feinbearbeitung mit Laserstrahl der Oberfläche einer Bohrung**
Tool for precise machining with laser beam the bore surface
Outil pour l'usinage de précision à l'aide d'un faisceau laser d'une surface d'un alésage

(43) Veröffentlichungstag der Anmeldung: 06.10.2004
(73) Patentinhaber: Maschinenfabrik Gehring GmbH & Co. KG, 73760 Ostfildern (DE)
(72) Erfinder: Abeln, Tobias, Dr. Ing., 70327 Stuttgart (DE); Kull, Oliver, Dipl.-Ing., 73760 Ostfildern (DE)
(74) Vertreter: Dreiss, Fuhlendorf, Steimle & Becker

(56) Entgegenhaltungen:
- US-A- 4 978 834
- US-A- 5 129 895
- US-A- 5 496 309
- US-A- 5 971 755
- US-B1- 6 303 897

## Beschreibung

Die Erfindung betrifft ein Werkzeug zur Feinbearbeitung der Oberfläche einer Bohrung mit den Merkmalen nach dem Oberbegriff des Anspruchs 1 (siehe, z.B. , US-4 978 834).

Die Oberflächeneigenschaften aufeinander gleitender Bauteile bestimmen maßgebend deren tribologisches Funktionsverhalten. Insbesondere das Verschleißverhalten wird stark von der Ausbildung dieser Bauteiloberflächen beeinflußt. Die Optimierung derartiger tribologischer Systeme kann das Einsatzverhalten und die Lebensdauer deutlich verbessern. Am Beispiel der Zylinderoberfläche eines Verbrennungsmotors zeigt sich der Bedarf an einer Oberflächenstrukturierung. In die Zylinderwand eingebrachte Strukturen wirken als Schmierstoffreservoirs und als Mikrodruckkammern. Dabei kann sich zwischen der Zylinderwand und einem darauf gleitenden Kolben ein Schmierfilm bilden, auf dem die Reibpartner aufschwimmen. Idealerweise wird eine Oberflächenstrukturierung angestrebt, bei der sich eine möglichst vollständige hydrodynamische Schmierung unter Vermeidung von Festkörperreibung einstellt.

Aus der DE 295 06 005 ist eine Einrichtung zur Bearbeitung von Bohrungen in Werkstücken mittels eines Laserstrahls bekannt. Die Einrichtung weist eine in die zu bearbeitende Bohrung einführbare Maschinenspindel mit einem Optiksystem zur Führung eines Laserstrahles auf. Der Laserstrahl wird etwa achsparallel zur Maschinenspindel in das Optiksystem eingeführt und mittels eines Spiegels radial nach außen gelenkt. Das den Laserstrahl bildende Strahlenbündel wird an der zu bearbeitenden Bauteiloberfläche in einem Brennpunkt fokussiert. Die Oberfläche kann dort gezielt bearbeitet werden. Insbesondere können exakt vorgebbare Mikrostrukturen präzise und reproduzierbar in die Bohrungsoberfläche eingebracht werden.

In der genannten Anordnung trifft das Strahlenbündel des hochenergetischen Lasers mit einer relativ hohen Energiedichte auf den Umlenkspiegel. Zur Vermeidung einer Überhitzung oder Schädigung des Umlenkspiegels muß dieser hohen optischen Anforderungen genügen. Insbesondere ist eine qualitativ hochwertige Verspiegelung erforderlich. Die Fertigung des Umlenkspiegels ist entsprechend kostenintensiv oder oft nicht möglich. Aus der hohen Energiedichte des Laserstrahls ergibt sich eine Mindestbaugröße, in dessen Folge Bohrungen kleineren Durchmessers nicht bearbeitet werden können. Bei der Strukturierung von Bohrungen mit einem kleinen Durchmesser entsteht bei der 90°-Umlenkung in der Bohrung das Problem, daß die Zerstörschwelle der Beschichtung des letzten Umlenkspiegels überschritten wird. Dies liegt daran, daß aufgrund des kleinen Strahldurchmessers auf dem Umlenkspiegel bei gleicher Laserenergie höhere Energiedichten entstehen. Wenn die Zerstörschwelle überschritten wird, kommt es zur Zerstörung des Spiegels und es erfolgt keine Umlenkung der Laserstrahlung mehr.

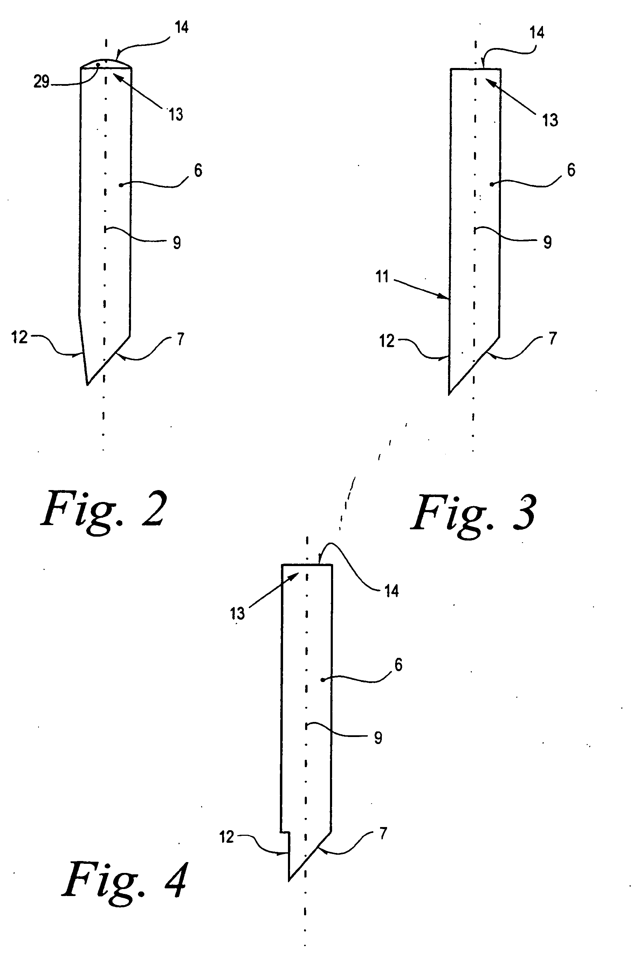

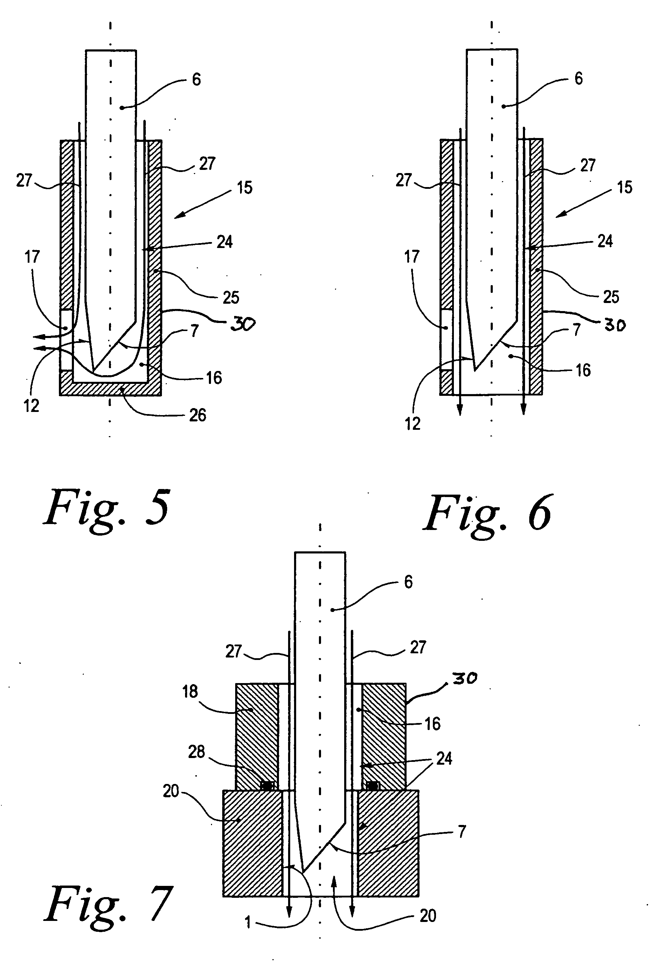

Aus der US 978,834 A ist ein Laser-Schweißgerät, das zum Verschweißen von Rissen in unter hohem Druck stehenden röhren in einem Atomreaktor dient, bekannt. Das System ist konstruktiv und maschinell sehr aufwändig (vergleiche Figur 2). Es arbeitet mit einem System aus Linsen L₁, L₂, L₃ und als Umlenkeinrichtung mit einem Spiegel (S. 5, Z. 33, Sp. 8, 2. 32, Fig. 5A und 5B). Über das Material ist keine Aussage gemacht. Dieses optische System ist nicht in eine Bohrung einbringbar und daher nicht geeignet, eine Bohrung mit Mikrostrukturen zu versehen.

Die US 5,971,755 A beschreibt ein Laserinstrument, bei dem ein Laserstrahl nach der Umlenkung an der axialen Spitze eines Optikelements fokussiert wird. Die Einrichtung nach der US 6,303,897 dient zwar zur Bearbeitung von Maschinenteilen, arbeitet aber mit einem separaten Umlenkspiegel, weist also die oben bereits erwähnten Nachteile auf. Die US 5,496,309 und die US 5,192,895 A zeigen in einem Katheter die Umlenkung des Laserlichts, jedoch mit intern anderem Aufbau.

Der Erfindung liegt die Aufgabe zugrunde, ein Werkzeug zur Feinbearbeitung der Oberfläche einer Bohrung anzugeben, deren Einsatzbereich erweitert ist.

Die Aufgabe wird durch eine Einrichtung mit den Merkmalen des Anspruchs 1 gelöst.

Dazu wird ein Werkzeug mit einem Strahlwerkzeug und einer Umlenkeinrichtung vorgeschlagen, bei der das Strahlwerkzeug ein im Bereich der Wellenlänge des Laserstrahls lichtdurchlässiges und zur Durchleitung des Laserstrahls vorgesehenes Optikelement mit einer schrägstehenden, die Umlenkeinrichtung bildenden optische Fläche aufweist. Beim Durchgang durch das Optikelement trifft dabei der Laserstrahl innenseitig auf die optische Fläche. Unter Ausnutzung der sich einstellenden Totalreflexion wird der Laserstrahl umgelenkt und kann der zur bearbeitenden Oberfläche zugeführt werden.

Es hat sich gezeigt, daß die optische Fläche zur Strahlumlenkung bei auftretender Totalreflexion Laserstrahlen mit hoher Energiedichte reflektieren kann, ohne dabei Schaden zu nehmen. Das Strahlwerkzeug kann mit höheren Energiedichten auf der umlenkenden optischen Fläche beaufschlagt werden. Das Strahlwerkzeug mit der optischen Fläche kann aufgrund der höheren Zerstörschwelle entsprechend klein ausgebildet sein, wodurch sich die Möglichkeit der Oberflächenbearbeitung auch in vergleichsweise kleinen Bohrungen ergibt.

Gemäß der Erfindung ist die optische Fläche derart geneigt angeordnet, daß der Winkel zwischen einer Flächennormalen der optischen Fläche und einer bezogen auf die optische Fläche vorgesehenen mittleren Einfallrichtung des Laserstrahls größer ist als ein sich aus dem Brechungsindex des Materials vom Optikelement ergebender Totalreflexionswinkel. Der Laserstrahl kann dabei als nicht parallel verlaufendes bzw. fokussiertes Strahlenbündel der optischen Fläche zugeführt werden.

Als Material des Optikelementes ist Quarzglas eingesetzt, da Quarzglas im Bereich der Wellenlänge entsprechender Laser von etwa 1 µm eine sehr hohe Lichtdurchlässigkeit aufweist.

In zweckmäßiger Weiterbildung weist das Optikelement eine langgestreckte, in die Bohrung einführbare Bauform auf, bei der die mittlere Einfallrichtung im wesentlichen parallel und insbesondere achsgleich zu einer Längsachse des Optikelementes liegt. Dadurch wird erreicht, daß das Optikelement entsprechend tief in Bohrungen selbst kleinen Durchmessers eingeführt werden kann.

In einer vorteilhaften Weiterbildung weist das Optikelement eine Lichtaustrittsfläche auf, die durch einen Teil der zylindrischen Oberfläche des Optikelementes gebildet ist. In Verbindung mit einer weiter unten beschriebenen Schutzhülse ergibt sich eine gute Spülwirkung im kritischen Bereich der Lichtaustrittsfläche.

Gemäß der Erfindung ist am Optikelement eine zur mittleren Einfallrichtung parallel liegende und plan ausgebildete Lichtaustrittsfläche vorgesehen. Die plane Oberfläche führt im Durchgang eines fokussierten Strahlenbündels zu einer derartigen Lichtbrechung, daß sich ein zumindest näherungsweise punktförmiger Brennpunkt an der zu bearbeitenden Oberfläche einstellen läßt.

Falls α ≠ 45° ist, ist es notwendig, die plan ausgebildete Lichtaustrittsfläche bezogen auf die mittlere Einfallrichtung geneigt anzuordnen. Unter Ausnutzung der sich dabei einstellenden Lichtbrechung kann dem austretenden Laserstrahl eine gewünschte axiale Neigungsänderung gegeben werden. Die genannte Anordnung ist insbesondere im Zusammenhang mit Quarzglas oder anderen Materialien mit vergleichsweise geringem Brechungsindex vorteilhaft. Aus dem geringen Brechungsindex kann sich zur Erzielung der gewünschten Totalreflexion ein vergleichsweise hoher Neigungswinkel der optischen Fläche ergeben. Ein dabei an der optischen Fläche reflektierter Laserstrahl weist dabei eine unerwünschte axiale Richtungskomponente auf. Bei entsprechender Schrägstellung der Lichtaustrittsfläche ist der austretende Laserstrahl in einfacher Weise unter Ausnutzung der Lichtbrechung in eine im wesentlichen axiale Richtung umlenkbar.

In einer bevorzugten Ausführungsform ist an der Strahleintrittsfläche eine Fokussiereinrichtung für den Laserstrahl vorgesehen. Die Fokussiereinrichtung kann dabei eine vorgeschaltete Linse oder ein Linsensystem sowie eine entsprechend gestaltete Lichteintrittsfläche des Optikelementes umfassen. Bei entsprechender Auslegung der Fokussiereinrichtung ist ein Strahlengang einstellbar, der am vorgesehenen Bearbeitungsort ein vorgegebenes Lasermuster präzise abbildet.

Als zweckmäßig hat sich dabei eine Fokussiereinrichtung herausgestellt, die eine linsenförmig gewölbte Lichteintrittsfläche des Öptikelementes umfaßt. Abhängig von der linsenförmigen Wölbung der Lichteintrittsfläche läßt sich die Strahlführung im Optikelement nahezu beliebig in gewünschter Weise einstellen. Beispielsweise in Verbindung mit einer Bauform, bei der die Lichtaustrittsfläche durch die zylindrische Oberfläche eines entsprechend zylindrisch ausgeführten Optikelementes gebildet ist, ergibt sich an der Lichtaustrittsfläche eine Brechung vorrangig in nur einer Richtung. Zur Kompensation dieses Effektes kann die Lichteintrittsfläche beispielsweise in nur einer, quer dazu liegenden Richtung gewölbt ausgeführt sein. Im Ergebnis läßt sich dadurch mit einfachen Mitteln ein präzise fokussierter Lichtpunkt an der zu bearbeitenden Oberfläche abbilden.

In einer vorteilhaften Weiterbildung ist eine Spüleinrichtung zur Spülung des Optikelementes mit einem Spülmedium während des Betriebes der Einrichtung vorgesehen. Bei einer Durchleitung des Spülmediums können die empfindlichen optischen Oberflächen des Optikelementes, insbesondere dessen Lichtaustrittsfläche und Umlenkfläche zuverlässig von mittels des Laserstrahles abgetragenen Partikeln freigehalten werden. Die optische Qualität der Einrichtung ist unter Vermeidung von lokalen Überhitzungen bzw. Schädigungen zuverlässig und dauerhaft sichergestellt.

Dabei hat sich eine Bauform als zweckmäßig herausgestellt, bei der das Optikelement zumindest teilweise von einer Schutzhülse beabstandet umschlossen ist, wobei der beabstandete Bereich zur Durchleitung eines Spülmediums vorgesehen ist. Durch die Hülse kann eine gute Führung des Spülmediums erreicht werden.

In einer zweckmäßigen Weiterbildung kann die Schutzhülse derart ausgebildet sein, daß sie im Bereich der optischen Fläche offen ist. Das Spülmedium wird dabei im wesentlichen parallel am Optikelement vorbeigeführt und kann an der offenen Seite austreten. Eine Rückführung des Spülmediums erfolgt dabei in zu bearbeitenden Sacklöchern außenseitig der Schutzhülse in entgegengesetzter Richtung oder bei Durchgangsbohrungen in Richtung des offenen Endes.

Es kann auch eine Bauform der Schutzhülse zweckmäßig sein, die im Bereich der optischen Fläche geschlossen ist und eine insbesondere im Bereich der Lichtaustrittsfläche liegende Ausströmöffnung aufweist. Die geschlossene Bauform ermöglicht eine verbesserte Strömungsführung des Spülmediums im Bereich der optischen Fläche und der Lichtaustrittsfläche und damit eine verbesserte Spülwirkung.

Zur Bearbeitung von Durchgangsbohrungen kann auch eine Spülhülse vorgesehen sein, die zur stirnseitigen Anlage an der Bohrung vorgesehen ist. Im Bereich der Bohrung wird dabei das Spülmedium mittels der Bohrungswand geführt. Bei einer derartigen Ausbildung kann das Optikelement direkt in die Bohrung eingeführt werden, wobei dessen Durchmesser nicht durch eine separate Schutzhülse vergrößert wird. Dementsprechend können auch Bohrungen mit sehr kleinem Durchmesser bearbeitet werden.

Als Spülmedium hat sich ein Gas, insbesondere Luft, oder ein Fluid, insbesondere Wasser, als wirkungsvoll und zweckmäßig herausgestellt.

Ausführungsbeispiele der Erfindung sind im folgenden anhand der Zeichnung näher beschrieben. Es zeigen:
- Fig. 1: in einer schematischen Schnittdarstellung ein in eine Durchgangsbohrung eingeführtes Optikelement mit einer Fokussiereinrichtung für einen Laserstrahl,
- Fig. 2: in einer schematischen Darstellung eine Variante des Optikelementes nach Fig. 1 mit einer linsenförmig gewölbten Lichteintrittsfläche,
- Fig. 3: ein optisches Element mit einer ebenen Lichteintrittsfläche und einer zylindrischen Lichtaustrittsfläche, das nicht im Gegenstand der Erfindung steht
- Fig. 4: eine weitere Variante der Anordnung nach der Fig. 2 mit einer parallel zur mittleren Einfallrichtung liegenden und plan ausgebildeten Lichtaustrittsfläche,
- Fig. 5: in schematischer Darstellung das Optikelement nach Fig. 1 mit einer geschlossenen Schutzhülse,
- Fig. 6: eine Variante der Anordnung nach Fig. 5 mit einer im Bereich der optischen Fläche offenen Schutzhülse,
- Fig. 7: in schematischer Darstellung das in eine Durchgangsbohrung eingeführte Optikelement nach Fig. 1 mit einer stirnseitig an die Bohrung angelegten Spülhülse.

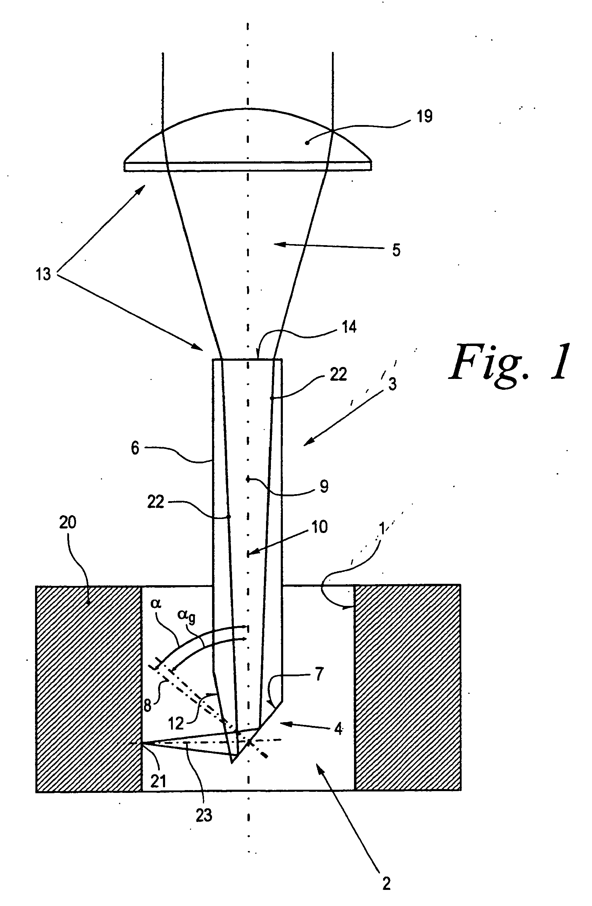

Fig. 1 zeigt in schematischer Darstellung wesentliche Komponenten einer Einrichtung zur Feinbearbeitung der Oberfläche 1 einer Bohrung 2. Die Einrichtung weist ein Strahlwerkzeug 3 auf, welches eine Fokussiereinrichtung 13, ein Optikelement 6 sowie eine Umlenkeinrichtung 4 für einen Laserstrahl 5 umfaßt. Als Laserstrahl 5 im Sinne der vorliegenden Erfindung ist ein durch Randstrahlen 22 begrenztes Strahlenbündel vorgesehen.

Das Optikelement 6 ist im Bereich der Wellenlänge des Laserstrahls 5 lichtdurchlässig und zur Durchleitung des Laserstrahls 5 vorgesehen. Als Material für das Optikelement 6 ist im gezeigten Ausführungsbeispiel ein Quarzglas mit einem Brechungsindex von etwa n = 1,45 ausgewählt. Das Optikelement 6 weist eine schrägstehende, die Umlenkeinrichtung 4 bildende optische Fläche 7 auf, die vorzugsweise als polierte Fläche ausgebildet ist.

Im gezeigten Ausführungsbeispiel weist das Optikelement 6 eine langgestreckte, in die Bohrung 2 einführbare und im wesentlichen zylindrisch ausgebildete Bauform auf. Der Laserstrahl 5 ist achsgleich zur Längsachse 10 in das Optikelement 6 eingeleitet und trifft mit einer mittleren Einfallrichtung 9 achsgleich zur Längsachse 10 auf die optische Fläche 7.

Der Neigungswinkel der optischen Fläche 7 ist als Winkel α zwischen einer Flächennormalen 8 der optischen Fläche 7 und der mittleren Einfallrichtung 9 definiert und beträgt im gezeigten Ausführungsbeispiel mehr als 43,6°. Der Grenzwinkel der Totalreflexion α_{g} ergibt sich aus dem Brechungsindex n des Optikelementmaterials; bei dem hier eingesetzten Quarzglas mit einem Brechungsindex n = 1,45 beträgt der Totalreflexionswinkel α_{g} = arcsin (1/n) = 43,6°. Der hier gewählte Winkel α ist damit größer als der Totalreflexionswinkel α_{g}, wodurch sich Totalreflexion des Laserstrahls 5 einstellt. Bei der gezeigten Anordnung wird der Laserstrahl 5 an der optischen Fläche 7 mit einer bezogen auf die mittlere Einfallrichtung 9 axialen Komponente reflektiert und tritt durch eine geneigte Lichtaustrittsfläche 12 in Richtung der Oberfläche 1 der Bohrung 2 aus dem Optikelement 6 aus. Die Lichtaustrittsfläche 12 ist plan ausgebildet und bezogen auf die mittlere Einfallrichtung 9 derart geneigt, daß ein aus der Lichtaustrittsfläche 12 austretender Mittelstrahl 23 eine im wesentlichen radiale Richtung ohne nennenswerte axiale Komponente aufweist.

Die Fokussiereinrichtung 13 umfaßt im gezeigten Ausführungsbeispiel eine dem Optikelement 6 vorgeschaltete, plan-konvex ausgebildete Linse 19 sowie die plan ausgeführte Lichteintrittsfläche 14 des Optikelementes 6. Die Fokussiereinrichtung 13 ist derart eingestellt, daß der Laserstrahl 5 in einem Brennpunkt 21 fokussiert auf die Oberfläche 1 auftritt.

Anstelle der gezeigten langgestreckten und in die Bohrung 2 des Werkstückes 20 einführbaren Bauform des Optikelementes 6 kann auch jede andere geeignete Bauform vorgesehen sein, wobei zur Bearbeitung von Randbereichen der Bohrung 2 eine Einführung des Strahlwerkzeuges 3 bzw. des Optikelementes 6 in die Bohrung 2 nicht zwingend erforderlich ist.

Fig. 2 zeigt in schematischer Darstellung eine Variante des Optikelementes 6 nach Fig. 1. Als Teil der Fokussiereinrichtung 13 ist die Lichteintrittsfläche 14 als sphärisch konvex gewölbtes Linsenelement 29 ausgebildet. Es können auch konkave und/oder asphärisch bzw. in nur einer Richtung gewölbte Ausführungen zweckmäßig sein.

Nach Fig. 3 ist ein optisches Element, das nicht unter dem Gegenstand des Anspruchs 1 steht , bei der die Lichteintrittsfläche 14 plan ausgeführt ist. Das Optikelement 6 weist eine langgestreckte zylindrische Bauform auf, wobei durch einen Teil der zylindrischen Oberfläche 11 die Lichtaustrittsfläche 12 gebildet ist. Zur Kompensation der optischen Eigenschaften der nur in eine Richtung gewölbten zylindrischen Oberfläche 11 kann beispielsweise an der Lichteintrittsfläche 14 ein in einer quer dazu liegenden Richtung einfach gewölbtes Linsenelement 29 (Fig. 2) vorgesehen sein.

Fig. 4 zeigt eine weitere Variante der Anordnung nach der Fig. 2, bei der am Optikelement 6 eine zur mittleren Einfallrichtung 9 parallel liegende und plan ausgebildete Lichtaustrittsfläche 12 vorgesehen ist.

In den übrigen Merkmalen und Bezugszeichen stimmt das Optikelement 6 nach den Fig. 2 bis 4 mit dem nach Fig. 1 überein.

Die Prinzipdarstellung nach Fig. 5 zeigt das Optikelement 6 nach Fig. 1 mit einer Spüleinrichtung 30, welches zumindest teilweise von einer die Spüleinrichtung 30 bildenden Schutzhülse 15 beabstandet umschlossen ist. Ein beabstandeter Bereich 24 ist zur Durchleitung eines Spülmediums 16 vorgesehen. Das Spülmedium 16 kann ein Gas, insbesondere Luft, oder ein Fluid, insbesondere Wasser, sein. Es kommen auch andere Spülmedien wie Stickstoff, Öl oder dgl. in Frage.

Die Schutzhülse 15 weist eine im wesentlichen zylindrische Wand 25 auf, die im Bereich der optischen Fläche 7 mittels eines Bodens 26 geschlossen ist. Im Bereich der Lichtaustrittsfläche 12 ist eine Ausströmöffnung 17 vorgesehen, durch die das etwa entlang der Pfeile 27 durch die Schutzhülse 15 durchgeleitete Spülmedium 16 austreten kann. Bei der gezeigten Anordnung tritt der Laserstrahl 5 (Fig. 1) ebenfalls durch die Ausströmöffnung 17 aus. Es können auch weitere oder an einem anderen Ort vorgesehene Ausströmöffnungen 17 zweckmäßig sein.

Bei der in Fig. 6 gezeigten Variante der Anordnung nach Fig. 5 ist die Schutzhülse 15 im Bereich der optischen Fläche 7 offen. Das etwa entlang der Pfeile 27 durch die Schutzhülse 15 geleitete Spülmedium 6 tritt dabei vorrangig an dem freien Ende der Schutzhülse 15 aus. Die Ausströmöffnung 17 dient dabei im wesentlichen zur Durchführung des Laserstrahls 5 nach Fig. 1. Die Ausströmöffnung 17 kann dabei auch beispielsweise durch ein Fenster hoher Laserlichtdurchlässigkeit geschlossen sein.

Fig. 7 zeigt in schematischer Darstellung das teilweise in die Bohrung 2 des Werkstückes 20 eingeführte Optikelement nach Fig. 1, wobei das Optikelement 6 in seinem außerhalb des Werkstückes 20 liegenden Bereich von einer die Spüleinrichtung 30 bildenden Spülhülse 18 mit Abstand umschlossen ist. Die Spülhülse 18 liegt stirnseitig der Durchgangsbohrung 2 am Werkstück 20 mittels eines Dichtringes 28 an. Bei der gezeigten Anordnung wird das Spülmedium 16 etwa entlang der Pfeile 27 durch die beabstandeten Bereiche 24 zwischen der Spülhülse 18 bzw. der Oberfläche 1 und dem Optikelement 6 durchgeleitet.

Das Strahlwerkzeug 3 sollte vor abgetragenem Material geschützt werden, da die Zerstörschwelle des Glases bei verunreinigter Oberfläche sinkt. Hierzu kann eine als Düse ausgestaltete Hülse dienen, wobei eine koaxial oder quer zum Strahlaustritt gerichtete Strömung möglich ist.

## Patentansprüche

1. Werkzeug zur Feinbearbeitung der Oberfläche einer Bohrung durch Einbringen von Mikrostrukturen, das ein langgestrecktes Optikelement (6) aufweist und an einer drehangetriebenen Maschinenspindel anordenbar und mit dieser in die Bohrung einführbar ist, wobei, in Verwendung, durch das Optikelement (6) ein hochenergetischer Laserstrahl (5) in axialer Richtung geführt und anschließend durch eine Umlenkeinrichtung auf die zu bearbeitende Oberfläche umgelenkt wird, **dadurch gekennzeichnet, dass** das Optikelement (6) durch ein im Bereich der Wellenlänge des Laserstrahls lichtdurchlässiges Quarz und die Umlenkeinrichtung durch eine total reflektierende optische Fläche (7) des Optikelements (6) gebildet wird, wobei die optische Fläche (7) relativ zur achsparallelen Einfallsrichtung (9) des Laserstrahls schräg geneigt ist, und dass der Winkel (α) zwischen einer Flächennormalen (8) der optischen Fläche (7) und der Einfallsrichtung (9) größer ist als ein sich aus dem Brechungsindex des Quarzes ergebender Total reflexionswinkel (α_{g}), und dass das Optikelement (6) eine plan gebildete Lichtaustrittsfläche (12) aufweist, durch die der von der optischen Fläche (7) umgelenkte Laserstrahl austritt.

2. Werkzeug nach Anspruch 1, **dadurch gekennzeichnet, dass** die Lichtaustrittsfläche (12) am Optikelement (6) zur Einfallsrichtung (9) des Laserstrahls parallel liegend ausgebildet ist.

3. Werkzeug nach Anspruch 1, **dadurch gekennzeichnet, dass** die Lichtaustrittsfläche (12) am Optikelement (6) zur Einfallsrichtung (9) des Laserstrahls geneigt ist.

4. Werkzeug nach Anspruch 1
**dadurch gekennzeichnet, daß** eingangsseitig der optischen Fläche (7) eine Fokussiereinrichtung (13) für den Laserstrahl (5) vorgesehen ist.

5. Werkzeug nach Anspruch 4,
**dadurch gekennzeichnet, daß** die Fokussiereinrichtung (13) eine linsenförmig gewölbte Lichteintrittsfläche (14) des Optikelementes (6) umfaßt.

6. Werkzeug nach einem der Ansprüche 1 bis 5,
**dadurch gekennzeichnet, daß** eine Spüleinrichtung (30) zur Spülung des Optikelementes (6) mit einem Spülmedium (16) während des Betriebes der Einrichtung vorgesehen ist.

7. Werkzeug nach Anspruch 6,
**dadurch gekennzeichnet, daß** das Optikelement (6) zumindest teilweise von einer die Spüleinrichtung (30) bildenden Schutzhülse (15) beabstandet umschlossen ist, wobei der beabstandete Bereich (24) zur Durchleitung eines Spülmediums (16) vorgesehen ist.

8. Werkzeug nach Anspruch 7,
**dadurch gekennzeichnet, daß** die Schutzhülse (15) im Bereich der optischen Fläche (7) offen ist.

9. Werkzeug nach Anspruch 7,
**dadurch gekennzeichnet, daß** die Schutzhülse (15) im Bereich der optischen Fläche (7) geschlossen ist und eine insbesondere im Bereich der Lichtaustrittsfläche (12) liegende Ausströmöffnung (17) aufweist.

10. Werkzeug nach Anspruch 6,
**dadurch gekennzeichnet, daß** eine zur stirnseitigen Anlage an die Bohrung (2) vorgesehene, die Spüleinrichtung (30) bildende Spülhülse (18) vorgesehen ist.

11. Werkzeug nach einem der Ansprüche 6 bis 10,
**dadurch gekennzeichnet, daß** als Spülmedium (16) ein Gas, insbesondere Luft, oder ein Fluid, insbesondere Wasser, vorgesehen ist.

## Claims

1. Tool for precise machining of the surface of a bore by introducing microstructures, which has an elongated optical element (6) and can be disposed in a rotatably driven machine spindle and can be introduced with said spindle into the bore, wherein, during use, a high energy laser beam (5) is guided in the axial direction by means of the optical element (6) and is subsequently deflected by a deflecting apparatus onto the surface to be machined, **characterised in that** the optical element (6) is formed by a quartz which is transparent in the region of the wavelength of the laser beam and the deflecting apparatus is formed by a totally reflecting optical surface (7) of the optical element (6), wherein the optical surface (7) is obliquely inclined relative to the incidence direction (9) of the laser beam, which is parallel to the axis, and that the angle (α) between a surface normal (8) of the optical surface (7) and the incidence direction (9) is greater than a total reflection angle (α_{g}) given by the refractive index of the quartz, and that the optical element (6) has a planar light outlet surface (12) through which the laser beam deflected by the optical surface (7) emerges.

2. Tool according to claim 1, **characterised in that** the light outlet surface (12) on the optical element (6) is formed parallel to the incidence direction (9) of the laser beam.

3. Tool according to claim 1, **characterised in that** the light outlet surface (12) on the optical element (6) is inclined to the incidence direction (9) of the laser beam.

4. Tool according to claim 1, **characterised in that** on the input side of the optical surface (7) a focusing apparatus (13) for the laser beam (5) is provided.

5. Tool according to claim 4, **characterised in that** the focusing apparatus (13) comprises a lens-shaped arched light entry surface (14) of the optical element (6).

6. Tool according to one of the claims 1 to 5, **characterised in that** a flushing apparatus (30) for flushing the optical element (6) with a flushing medium (16) during operation of the tool is provided.

7. Tool according to claim 6, **characterised in that** the optical element (6) is at least partially surrounded at a distance by a protective sleeve (15) comprising a flushing apparatus (30), wherein the spacing region (24) is provided for conducting a flushing medium (16).

8. Tool according to claim 7, **characterised in that** the protective sleeve (15) is open in the region of the optical surface (7).

9. Tool according to claim 7, **characterised in that** the protective sleeve (15) is closed in the region of the optical surface (7) and has an outflow opening (17), in particular in the region of the light outlet surface (12).

10. Tool according to claim 6, **characterised in that** a flushing sleeve (18) provided for contacting the end face of the bore (2) and comprising the flushing apparatus (30) is provided.

11. Tool according to one of the claims 6 to 10, **characterised in that** as the flushing medium (16), a gas, in particular air, or a liquid, in particular water, is provided.

## Revendications

1. Outil permettant l'usinage de précision de la surface d'un alésage en introduisant des microstructures, lequel outil présente un élément optique (6) longitudinal et peut être disposé sur une broche de machine entraînée en rotation, et qui peut être introduit avec celle-ci dans l'alésage, moyennant quoi, lors de l'utilisation, un faisceau laser à haute énergie (5) est guidé dans la direction axiale au travers de l'élément optique (6) et y est ensuite dévié par un dispositif déflecteur pour parvenir sur la surface à usiner ; **caractérisé en ce que** l'élément optique (6) est formé par un quartz transparent dans le domaine de la longueur d'onde du faisceau laser et le dispositif déflecteur est formé par une surface optique (7) à réflexion totale de l'élément optique (6), moyennant quoi la surface optique (7) est inclinée de manière oblique par rapport à la direction d'incidence (9) parallèle à l'axe du faisceau laser, et **en ce que** l'angle (α) entre une normale (8) de la surface optique (7) et la direction d'incidence (9) est supérieur à l'angle de réflexion total (α₉) déduit de l'indice de réfraction du quartz, et **en ce que** l'élément optique (6) présente une surface de sortie de la lumière (12) configurée de manière plane, par laquelle sort le faisceau laser dévié par la surface optique (7).

2. Outil selon la revendication 1, **caractérisé en ce que** la surface de sortie de lumière (12) sur l'élément optique (6) est configurée de manière à être parallèle à la direction d'incidence (9) du faisceau laser.

3. Outil selon la revendication 1, **caractérisé en ce que** la surface de sortie de la lumière (12) sur l'élément optique (6) est inclinée par rapport à la direction d'incidence (9) du faisceau laser.

4. Outil selon la revendication 1, **caractérisé en ce que**, du côté de l'entrée de la surface optique (7), est prévu un dispositif de focalisation (13) pour le faisceau laser (5).

5. Outil selon la revendication 4, **caractérisé en ce que** le dispositif de focalisation (13) comprend une surface d'entrée de lumière (14) incurvée en forme de lentille de l'élément optique (6).

6. Outil selon l'une quelconque des revendications 1 à 5, **caractérisé en ce qu'**un dispositif de nettoyage (30) est prévu afin de nettoyer l'élément optique (6) avec un milieu de nettoyage (16) pendant le fonctionnement du dispositif.

7. Outil selon la revendication 6, **caractérisé en ce que** l'élément optique (6) est encerclé, en étant au moins espacé en partie de celle-ci, par une buse de nettoyage (15) formant le dispositif de nettoyage (30), moyennant quoi la zone éloignée (24) est prévue afin de véhiculer un milieu de nettoyage (16).

8. Outil selon la revendication 7, **caractérisé en ce que** la buse de nettoyage (15) est ouverte dans la zone de la surface optique (7).

9. Outil selon la revendication 7, **caractérisé en ce que** la buse de nettoyage (15) est fermée dans la zone de la surface optique (7), et présente un orifice d'évacuation (17) se trouvant en particulier dans la zone de la surface de sortie de la lumière (12).

10. Outil selon la revendication 6, **caractérisé en ce qu'**on prévoit une buse de nettoyage (18) prévue à un emplacement du côté frontal sur l'alésage (2), formant le dispositif de nettoyage (30).

11. Outil selon l'une quelconque des revendications 6 à 10, **caractérisé en ce que**, comme milieu de nettoyage (16), on utilise un gaz, en particulier de l'air, ou un fluide, en particulier de l'eau.
